# EUROPEAN PATENT APPLICATION

(11) **EP 1 933 551 A2**
(43) Date of publication of application: **18.06.2008**
(21) Application number: 07116677.1
(22) Date of filing: 18.09.2007
(51) Int. Cl.: H04N 5/445

(54) **Apparatus and method of displaying received broadcasts**

(30) Priority: 14.12.2006 KR 20060127743
(71) Applicant: Samsung Electronics Co., Ltd., Yeongtong-gu Suwon-si, Gyeonggi-do (KR)
(72) Inventor: Kim, Kyung-sik, Seoul (KR); Oh, Sang-seok, Gyeonggi-do (KR); Kim, Sang-hee, Gyeonggi-do (KR)
(74) Representative: Clark, Charles Robert

(57) **Abstract**

A broadcast receiving apparatus and a broadcast receiving method in which a tuned broadcast and previous broadcasts of broadcast channels not tuned are provided on a single broadcast screen, are provided. The broadcast receiving apparatus stores separately, for each regular time interval, previous broadcasts provided on tunable broadcast channels, and combines a broadcast currently provided on a broadcast channel, selected by a user to be tuned, with at least one of the previously stored broadcasts to generate a single broadcast screen. Therefore, various broadcast screens may be simultaneously displayed on a single screen without increasing the number of tuners, and thus a user may view various broadcasts at the same time.

## Description

Apparatuses and methods consistent with the present invention relate to receiving broadcasts. More particularly, the present invention relates to receiving broadcasts so that various broadcasts may be provided on a single screen.

Broadcast receiving apparatuses, such as televisions (TVs), are capable of displaying two or more broadcasts on a single screen at the same time to enable a user to view his or her choice of broadcasts.

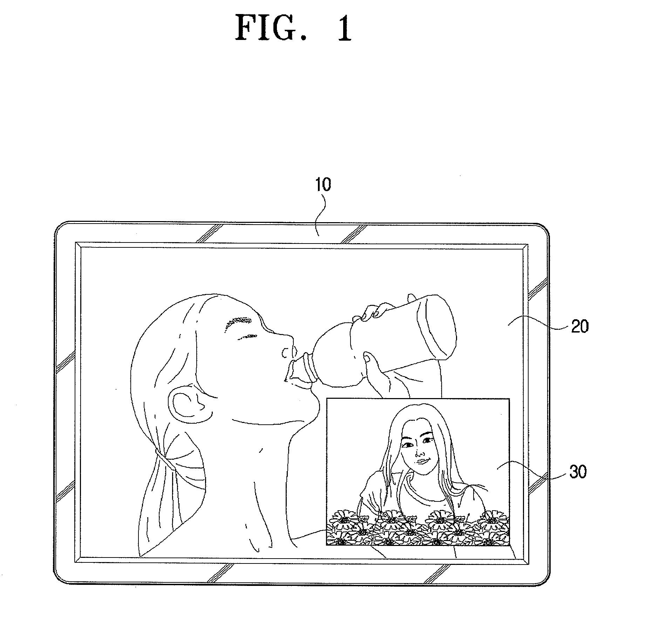

This function of broadcast receiving apparatuses is widely known as a picture-in-picture (PIP) function, and is illustrated in Figure 1, which shows a TV screen including the PIP function. As shown in Figure 1, a main screen 20 and a sub-screen 30 of a TV 10 are simultaneously displayed using the PIP function.

In order to operate the PIP function, two tuners are required in the TV. One tuner is used for tuning to a broadcast channel providing a broadcast to be displayed on the main screen 20, and the other tuner is used for tuning to a broadcast channel providing a broadcast to be displayed on the sub-screen 30.

The maximum number of broadcasts that can be displayed on a single screen is the same as the number of tuners. Accordingly, in order to display three or more broadcasts on a single screen, at least three tuners should be provided in a TV.

However, as cable broadcasts, satellite broadcasts, digital broadcasts or other broadcasts have become widespread, the number of broadcast channels that are capable of being tuned by a TV has increased. Therefore, if a user desires to view numerous broadcasts through a single screen simultaneously, there is a need to increase the number of tuners provided in a TV.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

The present invention aims to provides a broadcast receiving apparatus and a broadcast receiving method in which a tuned broadcast and previous broadcasts of broadcast channels not tuned are provided on a single screen, in order to display various broadcast screens on a single screen without increasing the number of tuners.

According to an aspect of the present invention, there is provided a broadcast receiving apparatus comprising a first broadcast receiver which tunes to a broadcast channel selected by a user; a second broadcast receiver which tunes to tunable broadcast channels at regular time intervals; a storage medium which stores separately for each regular time interval previous broadcasts provided on the broadcast channels tuned by the second broadcast receiver; and a combiner which combines a broadcast provided on a broadcast channel currently tuned by the first broadcast receiver with at least one of the previous broadcasts stored in the storage medium for each regular time interval to generate a single broadcast screen.

The previous broadcasts combined on the broadcast screen may be displayed as a moving picture.

The second broadcast receiver may tune to the tunable broadcast channels at regular time intervals while switching the channels. If the tunable broadcast channels are switched by the second broadcast receiver, the previous broadcasts that had previously been provided on a broadcast channel currently tuned by the second broadcast receiver may be deleted from the storage medium, and a broadcast currently provided on the broadcast channel currently tuned by the second broadcast receiver may be stored in the storage medium.

The combiner may combine broadcasts so that a screen of the broadcast provided on the broadcast channel tuned by the first broadcast receiver may be larger in size than a screen of at least one of the previous broadcasts stored in the storage medium.

The second broadcast receiver may partially tune to the tunable broadcast channels at regular time intervals, and may further comprise a third broadcast receiver which tunes to the remainder of the tunable broadcast channels at regular time intervals. The storage medium may store separately for each regular time interval previous broadcasts provided on broadcast channels tuned by the second and third broadcast receivers.

The regular time intervals may be determined by a user, and determined so as to be inversely proportional to the number of tunable broadcast channels.

The broadcast receiving apparatus may further comprise a display which displays the single broadcast screen combined by the combiner.

According to another aspect of the prevent invention, there is provided a broadcast receiving method comprising storing separately for each regular time interval previous broadcasts provided on tunable broadcast channels; and combining a broadcast currently provided on a broadcast channel selected by a user with at least one of the previously stored broadcasts to generate a single broadcast screen.

The previous broadcasts combined on the broadcast screen may be displayed as a moving picture.

The storing may comprise tuning to the tunable broadcast channels at regular time intervals while switching the channels; deleting the previous broadcasts that had previously been provided on a currently tuned broadcast channel, if the tunable broadcast channels are switched; and storing a broadcast currently provided on the currently tuned broadcast channel.

A screen of a broadcast provided on the broadcast channel selected by the user may be larger in size than a screen of at least one of the previously stored broadcasts.

The regular time intervals may be determined by a user, and determined so as to be inversely proportional to the number of tunable broadcast channels.

The broadcast receiving method may further comprise displaying the generated single broadcast screen.

Embodiments of the present invention are now described by way of eample with reference to the accompanying drawings, in which:
Figure 1 is a view illustrating a screen of a TV including a PIP function as is known in the art;
Figure 2 is a block diagram of a broadcast receiving apparatus according to an exemplary embodiment of the present invention;
Figure 3 is a flowchart explaining a broadcast receiving method according to an exemplary embodiment of the present invention;
Figure 4 is a view explaining the broadcast receiving method of Figure 3 in detail;
Figure 5 is a block diagram of a broadcast receiving apparatus according to another exemplary embodiment of the present invention; and
Figure 6 is a flowchart explaining a broadcast receiving method according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those particularly defined matters. Also, well-known functions or constructions are not described in detail since they would obscure the invention with unnecessary detail.

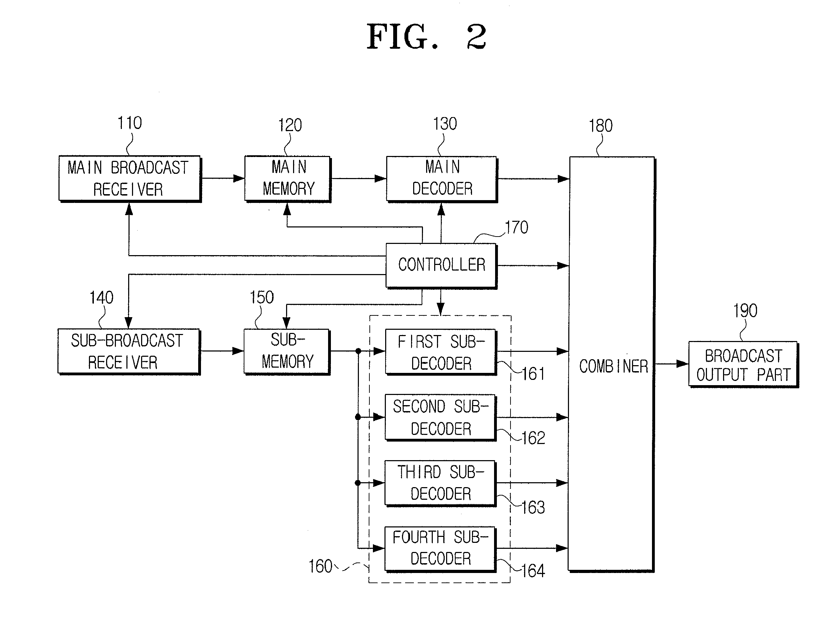

Figure 2 is a block diagram of a broadcast receiving apparatus according to an exemplary embodiment of the present invention. The broadcast receiving apparatus according to an exemplary embodiment of the present invention may display broadcasts provided on various broadcast channels on a single broadcast screen.

The broadcast screen of the broadcast receiving apparatus may display a broadcast provided on a broadcast channel, selected by a user to be tuned, and previous broadcasts provided on other broadcast channels which are not tuned.

As shown in Figure 2, the broadcast receiving apparatus according to an exemplary embodiment of the present invention comprises a main broadcast receiver 110, a main memory 120, a main decoder 130, a sub-broadcast receiver 140, a sub-memory 150, a sub-decoder 160, a controller 170, a combiner 180, and a broadcast output part 190.

The main broadcast receiver 110 tunes to a broadcast channel selected by a user, and receives a broadcast provided on the tuned broadcast channel.

The main memory 120 is a storage medium which temporarily stores the broadcast received by the main broadcast receiver 110. The main memory 120 may store a broadcast for a predetermined time interval (for example, six hours) by a first-in, first-out (FIFO) method. The temporarily stored broadcast may be used in time-shift playback. Time-shift playback is a function in which a broadcast that had been played back previously until a certain point is displayed on a broadcast screen.

The main decoder 130 decodes the broadcast output from the main memory 120, and transmits the broadcast to the combiner 180.

The sub-broadcast receiver 140 tunes to a broadcast channel, and receives a broadcast provided on the tuned broadcast channel in the same manner as the main broadcast receiver 110. However, the sub-broadcast receiver 140 tunes to tunable broadcast channels at regular time intervals (for example, every 10 seconds), and thus is distinct from the main broadcast receiver 110.

For example, if broadcast channels "1" to "100-2" are present, the sub-broadcast receiver 140 may sequentially tune to broadcast channel "1" for about 10 seconds, broadcast channel "1-1" for about 10 seconds, ..., broadcast channel "100-1" for about 10 seconds, and broadcast channel "100-2" for about 10 seconds.

The tuning operation of the sub-broadcast receiver 140 is recursively performed. In other words, the sub-broadcast receiver 140 tunes to the tunable broadcast channels while switching the broadcast channels. In this situation, after tuning to broadcast channel "100-2", the sub-broadcast receiver 140 retunes to broadcast channel "1".

The sub-memory 150 stores separately for each regular time interval broadcasts provided on the broadcast channels tuned by the sub-broadcast receiver 140. Accordingly, the sub-memory 150 stores the respective broadcasts previously provided on the tunable broadcast channels.

In this situation, the sub-memory 150 separately stores a previous broadcast for 10 seconds of broadcast channel "1", a previous broadcast for 10 seconds of broadcast channel "1-1", ..., a previous broadcast for 10 seconds of broadcast channel "100-1", and a previous broadcast for 10 seconds of broadcast channel "100-2".

If the broadcast channels are switched, the previous broadcasts stored in the sub-memory 150 may be deleted, and new broadcasts may be stored in the sub-memory 150. In this situation, if the sub-broadcast receiver 140 tunes to broadcast channel "100-2", and then retunes to broadcast channel "1", the previous broadcast of 10 seconds that had been provided on broadcast channel "1" and stored in the sub-memory 150 may be replaced with a broadcast currently provided on broadcast channel "1".

The sub-decoder 160 partially decodes the previous broadcasts separately stored in the sub-memory 150, and outputs the decoded broadcasts to the combiner 180. The sub-decoder 160 may comprise a first sub-decoder 161, a second sub-decoder 162, a third sub-decoder 163, and a fourth sub-decoder 164.

The first to fourth sub-decoders 161 to 164 decode four previous broadcasts from among the previous broadcasts separately stored in sub-memory 150, and output the decoded broadcasts to the combiner 180. In this situation, the controller 170 may select broadcasts to be decoded by the first to fourth sub-decoders 161 to 164.

The combiner 180 combines broadcasts output from the main decoder 130 and sub-decoder 160 to generate a single broadcast screen. On the broadcast screen generated by the combiner 180, a broadcast output from the main decoder 130 is displayed as a main screen, and previous broadcasts output from the sub-decoder 160 are displayed as a sub-screen. In other words, a screen of the broadcast output from the main decoder 130 is larger in size than screens of the previous broadcasts output from the sub-decoder 160.

The respective previous broadcasts are displayed as a moving picture on each sub-screen, and the playing back time corresponds to about 10 seconds. This is because the previous broadcasts stored in the sub-memory 150 each correspond to the period of time of about 10 seconds. In order to repeatedly display the respective previous broadcasts on each sub-screen, the first to fourth sub-decoders 161 to 164 may again decode the previous broadcasts, if decoding of the previous broadcasts is completed.

The broadcast output part 190 displays the single broadcast screen output from the combiner 180 on a display element such as a liquid crystal display (LCD) or a plasma display panel (PDP).

The controller 170 controls the entire operation of the broadcast receiving apparatus, including the broadcast receiving operation of the main and sub-broadcast receivers 110 and 140, the storing and outputting operation of the main memory and sub-memory 120 and 150, and the broadcast combining operation of the combiner 180.

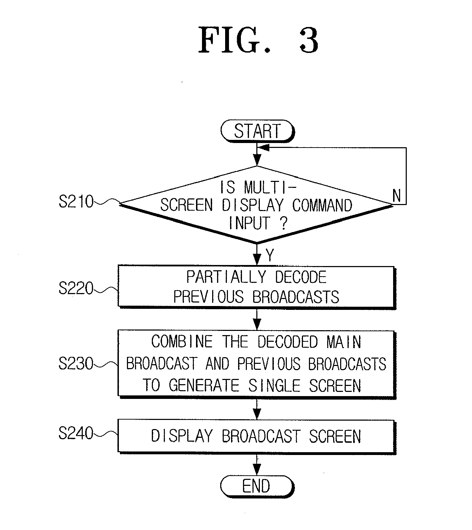

Specifically, the controller 170 controls the broadcast receiving apparatus so that a broadcast of a broadcast channel which is currently tuned by the main broadcast receiver 110 and previous broadcasts of other broadcast channels which are not tuned by the main broadcast receiver 110 can be displayed on a single broadcast screen. This operation will be described in more detail with reference to Figure 3. Figure 3 is a flowchart explaining a broadcast receiving method according to an exemplary embodiment of the present invention.

As shown in Figure 3, the controller 170 determines whether a "multi-screen" display command is input by a user (S210). In this situation, the "multi-screen" refers to a broadcast screen displaying the broadcast of the broadcast channel currently tuned by the main broadcast receiver 110, and previous broadcasts of other broadcast channels which are not tuned by the main broadcast receiver 110.

If it is determined that the "multi-screen" display command is input (S210-Y), the controller 170 may control such that the previous broadcasts separately stored in the sub-memory 150 are partially decoded (S220).

In order to perform operation S220, the controller 170 may select previous broadcasts from among the previous broadcasts separately stored in the sub-memory 150, in order to constitute the multi-screen. Additionally, the controller 170 may allow the selected previous broadcasts to be output from the sub-memory 150 and respectively applied to the first to fourth sub-decoders 161 to 164.

The previous broadcasts selected by the controller 170 may be determined by a user's button manipulation or through a menu screen, or by other means. Other means may include, for example, a method in which the controller 170 selects previous broadcasts from among four broadcast channels which are frequently selected by the user.

Next, the combiner 180 combines a main broadcast decoded and output by the main decoder 130 with previous broadcasts decoded and output by the sub-decoder 160 to generate a single broadcast screen (S230).

Specifically, the combiner 180 combines broadcasts so that the main broadcast output from the main decoder 130 may be displayed as a main screen, and the previous broadcasts output from the sub-decoder 160 may be displayed as a sub-screen.

The broadcast output part 190 displays the single broadcast screen output from the combiner 180 on the display element (S240).

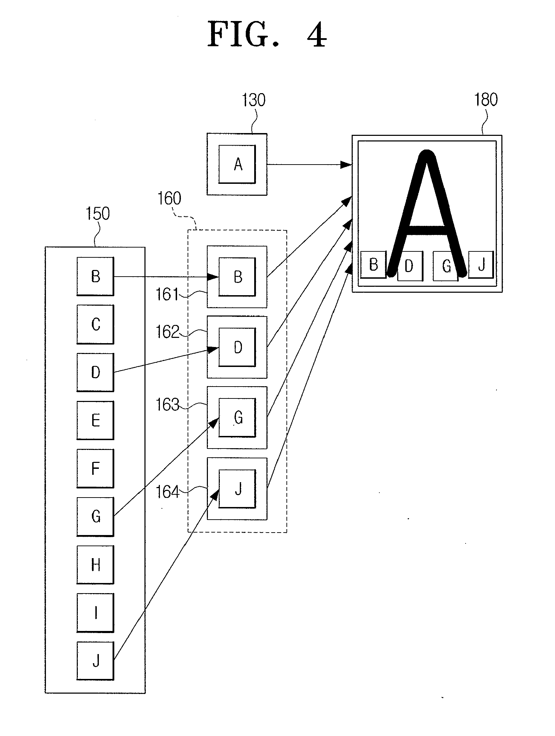

Hereinafter, the broadcast receiving method of Figure 3 will be described in more detail with reference to Figure 4. As shown in Figure 4, the first to fourth sub-decoders 161 to 164 included in the sub-decoder 160 decode four previous broadcasts B, D, G, and J selected by the controller 170 from among the previous broadcasts B, C, D, E, F, G, H, I, and J for each broadcast channel, which are separately stored in the sub-memory 150. This decoding operation corresponds to operation S220 of Figure 3.

In addition, as shown in Figure 4, the combiner 180 combines broadcasts so that a main broadcast A decoded and output from the main decoder 130 may be displayed as a main screen, and the previous broadcasts B, D, G, and J decoded and output from the sub-decoder 160 may be displayed as a sub-screen, and thus a single broadcast screen is generated. This operation corresponds to operation S230 of Figure 3.

The process for providing the multi-screen displaying the broadcast on the broadcast channel which is selected by the user and tuned, and the previous broadcasts on other broadcast channels which are not tuned has now been described in detail according to the exemplary embodiments.

It has been assumed that the sub-decoder 160 provided in the broadcast receiving apparatus according to the exemplary embodiments of the present invention decodes four different previous broadcasts to be output. In other words, in the exemplary embodiments of the present invention, all the first to fourth sub-decoders 161 to 164 provided in the sub-decoders 160 are used to decode and output four different previous broadcasts.

However, it is not necessary to operate all the first to fourth sub-decoders 161 to 164, and fewer than four decoders may be operated according to the number of required sub-screens. For example, if a user desires to display two previous broadcasts on two sub-screens, it is possible to operate only the first and second sub-decoders 161 and 162.

Additionally, in the exemplary embodiments of the present invention, four decoders are used to decode the previous broadcasts stored in the sub-memory 150. However, as this is only an exemplary embodiment for convenience of description, the number of decoders constituting the sub-decoder 160 is not limited to four. Two or three decoders constituting the sub-decoder 160 may be used, and four or more decoders may be also used. The number of decoders constituting the sub-decoder 160 may be determined based on the maximum number of previous broadcasts to be displayed as sub-screens.

The broadcast receiving apparatus according to the exemplary embodiment of the present invention comprises separately a memory which stores a broadcast tuned by the main broadcast receiver 110, and a memory which stores broadcasts tuned by the sub-broadcast receiver 140. In other words, the broadcast receiving apparatus according to the exemplary embodiment of the present invention comprises the main memory 120 and sub-memory 150. However, the broadcast receiving apparatus may combine the main memory 120 and the sub-memory 150 in a single memory.

Additionally, the sub-memory 150 may be divided into several blocks. Specifically, the broadcast receiving apparatus may comprise sub-memories to as the number of the decoders included in the sub-decoder 160.

In order to implement the present invention, two or more sub-broadcast receivers make it possible to reduce a cycle in which the broadcast channels are switched. For example, if two sub-broadcast receivers are present, one receiver switches from broadcast channels "1" to "50-2" to be tuned, and another receiver switches from broadcast channels "51" to "100-2" to be tuned. The sub-memory 150 may store the broadcasts tuned by the two sub-broadcast receivers.

In addition, in the exemplary embodiment of the present invention, the sub-broadcast receiver 140 tunes to each broadcast channel for every 10 seconds, but the present invention is not limited thereto. The time required to tune to the channels may be decided by a user, or automatically set by the controller 170 based on the number of tunable broadcast channels.

If the time is automatically set by the controller 170, the time may be inversely proportional to the number of tunable broadcast channels. For example, if ten broadcast channels are tunable, the time may be set to be about 10 seconds, and if twenty broadcast channels are tunable, the time may be set to be about 5 seconds.

As the broadcast receiving apparatus shown in Figure 2 is only an exemplary embodiment, not all blocks shown in Figure 2 need to be included in the broadcast receiving apparatus according to the exemplary embodiment of the present invention, and unnecessary blocks can be omitted. For example, when the broadcast receiving apparatus is a set-top box, the broadcast output part 190 may be omitted.

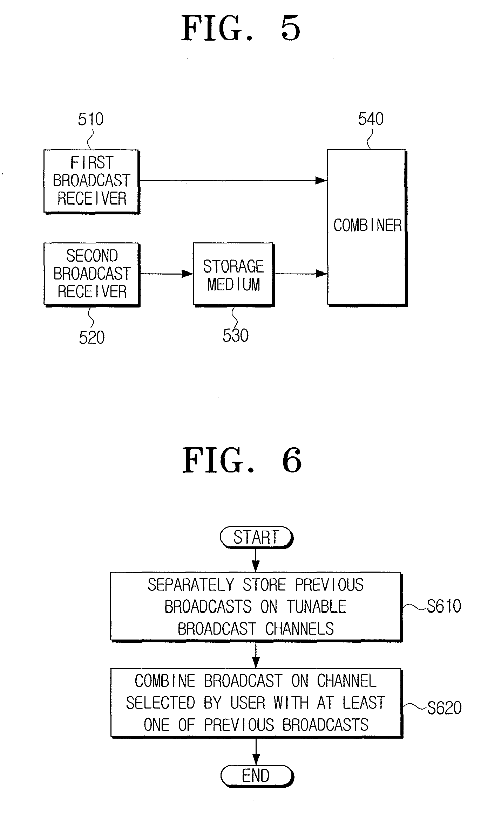

Hereinafter, a broadcast receiving apparatus and a broadcast receiving method according to another exemplary embodiment of the present invention will be described with reference to Figures 5 and 6.

As shown in Figure 5, the broadcast receiving apparatus according to another exemplary embodiment of the present invention comprises a first broadcast receiver 510, a second broadcast receiver 520, a storage medium 530, and a combiner 540.

The first broadcast receiver 510 tunes to a broadcast channel selected by a user, and the second broadcast receiver 520 tunes to tunable broadcast channels at regular time intervals. The storage medium 530 stores separately for each regular time interval previous broadcasts provided on the broadcast channels tuned by the second broadcast receiver 520. The combiner 540 combines a broadcast provided on a broadcast channel currently tuned by the first broadcast receiver 510 with at least one of previous broadcasts stored in the storage medium 530 for each regular time interval to generate a single broadcast screen.

According to the broadcast receiving method of Figure 6, the previous broadcasts provided on the broadcast channels capable of being tuned by the second broadcast receiver 520 for each regular time interval, are separately stored in the storage medium 530 (S610). The combiner 540 combines the broadcast currently displayed on the broadcast channel which is selected by the user and tuned by the first broadcast receiver 510, with at least one of the previous broadcasts which are stored in advance in the storage medium 530, to generate a single broadcast screen (S620).

Accordingly, it is possible to implement the broadcast receiving apparatus and method which may provide the multi-screen comprising the broadcast provided on the broadcast channel, selected by the user to be tuned, and the previous broadcasts provided on other broadcast channels not tuned.

As described above, according to the exemplary embodiments of the present invention, the broadcast provided on the broadcast channel, which is selected by the user to be tuned, and the previous broadcasts provided on other broadcast channels which are not tuned may be displayed on a single screen. Therefore, various broadcast screens may be simultaneously displayed on the single screen without an increase in the number of tuners, and thus it is possible to also provide a user with broadcasts of other broadcast channels which are not currently tuned.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiving apparatus comprising:
a first broadcast receiver arranged to tune to a broadcast channel selected by a user;
a second broadcast receiver arranged to tune to tunable broadcast channels at predetermined time intervals;
a storage medium arranged to store separately any previous broadcasts provided by the second broadcast receiver, for each time interval; and
a combiner arranged to combine a broadcast provided by the first broadcast receiver with at least one of the previous broadcasts stored in the storage medium for each time interval and to generate a single broadcast screen thereof.

2. The apparatus as claimed in claim 1, wherein the previous broadcasts combined on the broadcast screen are displayable as a moving picture.

3. The apparatus as claimed in claim 1 or 2, wherein the second broadcast receiver is arranged to tune to the tunable broadcast channels at regular predetermined time intervals while switching the channels;
and, if the tunable broadcast channels are switched by the second broadcast receiver, then the previous broadcasts that had previously been provided on a broadcast channel currently tuned by the second broadcast receiver are deleted from the storage medium, and a broadcast currently provided on the broadcast channel currently tuned by the second broadcast receiver is stored in the storage medium.

4. The apparatus as claimed in claim 1, 2 or 3, wherein the combiner is arranged to combine broadcasts so that a screen of the broadcast provided on the broadcast channel tuned by the first broadcast receiver is larger in size than a screen of at least one of the previous broadcasts stored in the storage medium.

5. The apparatus as claimed in any preceding claim, wherein the second broadcast receiver is arranged to partially tune to the tunable broadcast channels at regular time intervals, and further comprises a third broadcast receiver arranged to tune to the remainder of the tunable broadcast channels at regular time intervals; and
the storage medium is arranged to store separately for each regular time interval previous broadcasts provided on the broadcast channels tuned by the second and third broadcast receivers.

6. The apparatus as claimed in any preceding claim, wherein the time intervals are determinable by a user, or are inversely proportional to a number of tunable broadcast channels.

7. The apparatus as claimed in any preceding claim, further comprising a display for displaying the single broadcast screen combined by the combiner.

8. A broadcast receiving method comprising:
storing separately, for each of a predetermined time interval, previous broadcasts provided on tunable broadcast channels; and
combining a broadcast currently provided on a broadcast channel selected by a user with at least one of the previously stored broadcasts to generate a single broadcast screen.

9. The method as claimed in claim 8, wherein the previous broadcasts combined on the broadcast screen are displayed as a moving picture.

10. The method as claimed in claim 8 or 9, wherein the storing comprises:
tuning to the tunable broadcast channels while switching the channels at the time intervals;
if the tunable broadcast channels are switched, deleting the previous broadcasts that had previously been provided on a currently tuned broadcast channel; and
storing a broadcast currently provided on the currently tuned broadcast channel

11. The method as claimed in claim 8, 9 or 10, wherein a screen of a broadcast provided on the broadcast channel selected by the user is larger in size than a screen of at least one of the previously stored broadcasts.

12. The method as claimed in claim 8, 9, 10 or 11, wherein the time intervals are determined by a user, or are inversely proportional to the number of tunable broadcast channels.

13. The method as claimed in claim 8, 9, 10, 11 or 12 further comprising displaying the generated single broadcast screen.
